# EUROPEAN PATENT APPLICATION

(11) **EP 1 908 612 A1**
(43) Date of publication of application: **09.04.2008**
(21) Application number: 06021067.1
(22) Date of filing: 06.10.2006
(51) Int. Cl.: B60C 29/06, F16K 15/20

(54) **Two-way fluid check valve**

(71) Applicant: Huang, Tien-Tsai, Pan-Chiao, Taipei (TW)
(72) Inventor: Huang, Tien-Tsai, Pan-Chiao, Taipei (TW)
(74) Representative: Becker Kurig Straus

(57) **Abstract**

A multifunctional two-way fluid check valve (1) includes a hollow sleeve (100) internally defining a first (120) and a second chamber (130), and an inclined stop shoulder (140); an inflation-valve connecting head (150) located below the hollow sleeve (100) and having a gas mouth (a) mounted therein; a first (200) and a second (300) valve body elastically movably located in the first (120) and the second (130) chamber, respectively; and a gas inlet connector (400) mounted to an upper end of the second chamber (130). The second valve body (300) has an external inclined section (320) with a first airtight gasket (324) thereon in contact with an inner inclined shoulder section (133) on the second chamber (130), and a lower outer surface with a second airtight gasket (332) thereon in contact with the inclined stop shoulder (140) on the hollow sleeve (100). At least one release port (135) is formed on a wall of the second chamber (130) below the inner inclined shoulder section (133) and above the beveled stop shoulder (140).

## Description

### FIELD OF THE INVENTION

The present invention relates to a multifunctional two-way fluid check valve, and more particularly to a check valve capable of preventing a high-pressure fluid from passing therethrough in two directions.

### BACKGROUND OF THE INVENTION

A commercially available tire pump may be directly connected to a valve on a tire to inflate the tire and detect an internal pressure of the tire at the same time. Such conventional tire pump mainly includes a gas mouth, a pressure gauge, and a gas inlet control, and is connected to an air compressor. A user may operate the gas inlet control to supply a high-pressure gas from the air compressor to the tire via the gas mouth, and the pressure gauge located at the same gas passage measures the tire pressure at the same time. Since it is uneasy to preset a pressure value using the tire pump, the tire is either excessively or insufficiently inflated. The user has to inconveniently release or increase the supplied air many times before an ideal tire pressure can be reached.

Incorrect tire pressure would cause inconveniences or even dangers in driving. Taiwanese Patent Publication No. 578706 discloses a tire pressure detector, which is directly mounted in a tire to facilitate detection of the tire pressure. However, such internal-mounted tire pressure detector is uneasy to mount and dismount. For the purpose of convenient mounting and use, a tire pressure detector for directly mounting on a valve outside the tire has been developed. However, such external-mounted tire pressure detector tends to hinder the user from pumping the tire easily, and does not allow a correct pressure setting to enable proper inflation of a tire.

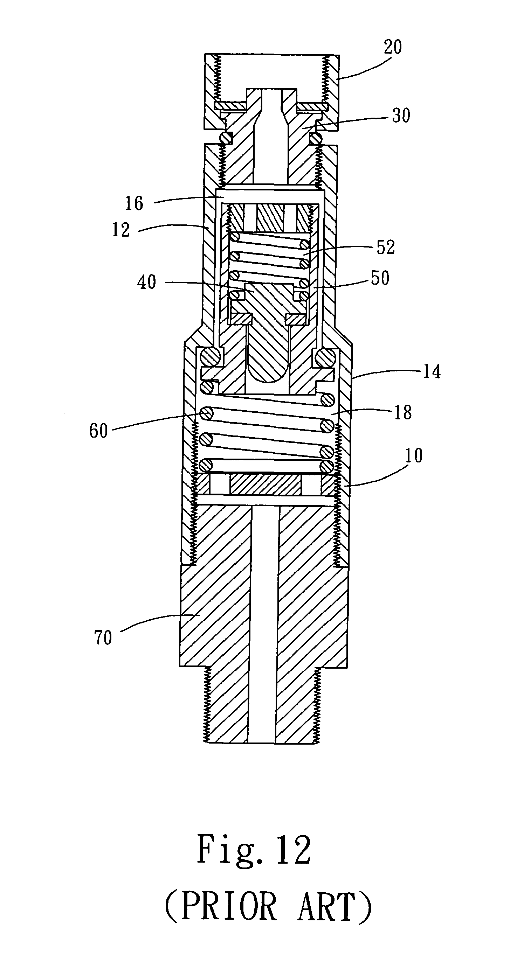

Fig. 12 is a vertical sectional view of a conventional two-way fluid check valve, which mainly includes a hollow sleeve 10, an inflation-valve connecting head 20, a gas mouth 30, a first valve body 40, a second valve body 50, a pressure regulation assembly 60, and a gas inlet connector 70. The gas mouth 30 and the gas inlet connector 70 are separately screwed to two ends of the hollow sleeve 10, and the inflation-valve connecting head 20 is mounted around the gas mouth 30. The hollow sleeve 10 is divided into a first sleeve section 12 and a second sleeve section 14, which internally define a first chamber 16 and a second chamber 18, respectively. The second valve body 50 is received in the first chamber 16 and internally defines a receiving space 52 for receiving the first valve body 40 therein. The pressure regulation assembly 60 is received in the second chamber 18.

The above-structured conventional two-way fluid check valve is employed on a tire pressure detector to enable a supply of high-pressure gas in one direction, that is, in forward or in rearward direction, and to enable presetting of a tire pressure setting, and releasing of surplus high-pressure gas or fluid from the valve. However, with the above-described conventional two-way fluid check valve, the surplus high-pressure gas or fluid is released along the same path for supplying the high-pressure gas or fluid. The surplus high-pressure gas or fluid is released from the valve via the gas inlet connector 70 to cause mutual interference between the supply and the release of gas or fluid, and accordingly, unstable pumping pressure. Under this condition, it is impossible for the tire being inflated to accurately reach a required pressure setting. Moreover, the above-described conventional two-way fluid check valve is not able to continuously detect the tire pressure when the tire has been inflated. The user has to inflate the tire now and then, so as to maintain the required tire pressure. Meanwhile, a separate tire gauge is necessary to detect the tire pressure, and therefore brings inconveniences to the user.

### SUMMARY OF THE INVENTION

A primary object of the present invention is to provide a multifunctional two-way fluid check valve, so as to release surplus fluid from the valve in a direction opposite to the fluid supply direction.

To achieve the above and other objects, the multifunctional two-way fluid check valve according to the present invention includes:
a hollow sleeve having a central partition formed therein, an inner space of the hollow sleeve above the central partition defining a first chamber and a second chamber located above and communicating with the first chamber; the hollow sleeve being provided on an inner wall surface at a joint of the first and the second chamber with a beveled stop shoulder; a hollow inflation-valve connecting head being provided on the hollow sleeve below the central partition; and the central partition having a central mounting hole to communicate the first chamber with the inflation-valve connecting head and hold a gas mouth thereto;
a first valve body being located in the first chamber and in the form of an upward tapered long stem having a flat head; a radially outward flange being formed at a lower end of the first valve body, and a first compression spring being located below the flange to allow the first valve body to elastically move axially in the first chamber;
a second valve body being located in the second chamber and in the form of a hollow cylinder defining a through hole extended along an axis of the cylinder, such that the head of the first valve may be received in the through hole; a second compression spring being located above the second valve body to allow the second valve body to elastically move axially in the second chamber; the second valve body being formed around an outer wall surface with a downward and inward inclined section, on which a first annular groove being formed for receiving a first airtight gasket therein; the second chamber being formed on an inner wall surface with an inclined shoulder section corresponding to the inclined section on the second valve body, such that when the second valve body is elastically moved downward, the first airtight gasket at the inclined section is pressed against the inclined shoulder section; at least one release port being formed on a wall of the second chamber between the inclined shoulder section on the second chamber and the beveled stop shoulder on the hollow sleeve; the second valve body being also formed around the outer wall surface closely above a lower end thereof with a second annular groove for receiving a second airtight gasket therein, and the second airtight gasket being located corresponding to the beveled stop shoulder;
a gas inlet connector being axially mounted in an upper part of the second chamber of the hollow sleeve, and defining along an axis thereof a gas inlet; and
a pressure indicating mechanism including an outer cover, a third compression spring, an annular bearer, and a floating ring; the outer cover being made of a transparent material and screwed to and thereby mounted around a lower part of the hollow sleeve, such that an annular chamber is formed between an inner wall surface of the outer cover and an outer wall surface of the hollow sleeve; at least one through hole being formed on a wall of the hollow sleeve between the first chamber and the annular chamber to communicate the first chamber with the annular chamber; the annular chamber being also communicable with the release port to thereby communicate with outside of the two-way fluid check valve; the third compression spring being located in the annular chamber, and the annular bearer and the floating ring being sequentially located below the third compression spring to bear a downward elastic force of the third compression spring applied thereon and thereby axially movable up or down in the annular chamber; and either a first pressure-indicating color ring or a pressure-indicating scale being provided around the outer wall surface of the outer cover at a predetermined position, and a second pressure-indicating color ring showing a color different from that of the first pressure-indicating color ring being provided on an outer surface of the annular bearer.

### BRIEF DESCRIPTION OF THE DRAWINGS

The structure and the technical means adopted by the present invention to achieve the above and other obj ects can be best understood by referring to the following detailed description of the preferred embodiments and the accompanying drawings, wherein
Fig. 1 is a vertical sectional view of a multifunctional two-way fluid check valve according to a first embodiment of the present invention;
Fig. 2A shows the multifunctional two-way fluid check valve of Fig. 1 being used during inflation of a tire;
Fig. 2B shows the state of the multifunctional two-way fluid check valve of Fig. 2A when the inflated tire exceeds a pressure setting therefor;
Fig. 3 is a vertical sectional view of a multifunctional two-way fluid check valve according to a second embodiment of the present invention;
Fig. 4 is a vertical sectional view of a multifunctional two-way fluid check valve according to a third embodiment of the present invention;
Fig. 5 is a vertical sectional view of a multifunctional two-way fluid check valve according to a fourth embodiment of the present invention;
Fig. 6A shows the multifunctional two-way fluid check valve of Fig. 5 being used during inflation of a tire;
Fig. 6B shows the state of the multifunctional two-way fluid check valve of Fig. 6A when the inflated tire exceeds a pressure setting therefor;
Fig. 6C shows the state of the multifunctional two-way fluid check valve of Fig. 6A when the inflated tire reaches the pressure setting therefor;
Fig. 7 shows the state of the multifunctional two-way fluid check valve of Fig. 6A when the inflated tire has not reached the pressure setting therefor;
Fig. 8 is a vertical sectional view of a multifunctional two-way fluid check valve according to a fifth embodiment of the present invention;
Fig. 9 is a vertical sectional view of a multifunctional two-way fluid check valve according to a sixth embodiment of the present invention;
Fig. 10 is a vertical sectional view of a multifunctional two-way fluid check valve according to a seventh embodiment of the present invention;
Fig. 11 is a vertical sectional view of a multifunctional two-way fluid check valve according to an eighth embodiment of the present invention; and
Fig. 12 is a vertical sectional view of a conventional two-way fluid check valve.

### DETAILED DESCRIPTION OF THE PREFERRED EMBODIMENTS

The present invention is now described with preferred embodiments thereof. In the illustrated embodiments, the present invention is used to control a gas flow for inflating a tire. However, it is understood the present invention may also be used to control a liquid flow.

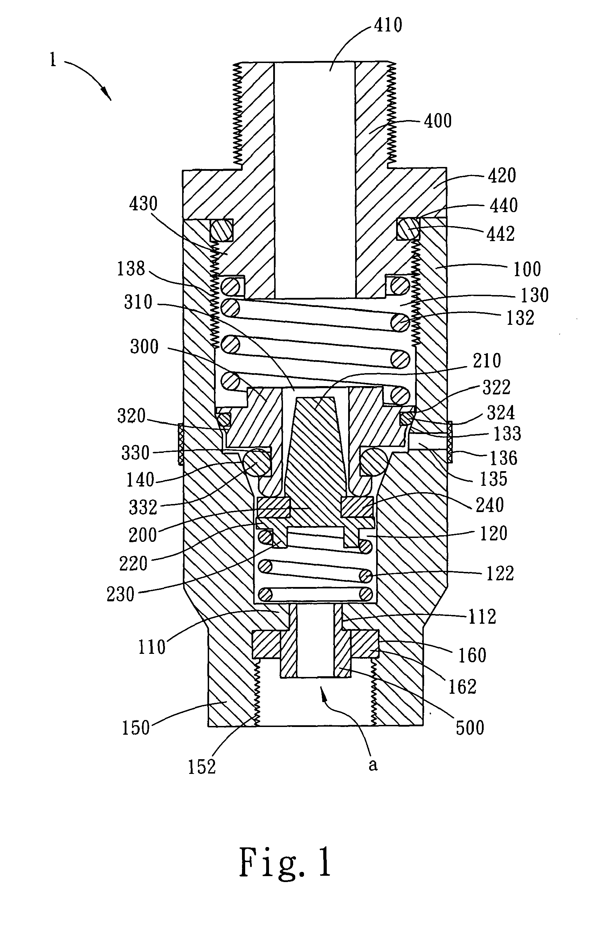

Please refer to Fig. 1 that is a vertical sectional view of a multifunctional two-way fluid check valve 1 according to a first embodiment of the present invention. As shown, the two-way fluid check valve 1 of the first embodiment includes a hollow sleeve 100, a gas inlet connector 400, a first valve body 200, a second valve body 300, and a gas mouth 500.

The hollow sleeve 100 is a hollow tubular member having a central partition 110 formed therein. An inner space of the hollow sleeve 100 above the central partition 110 defines a first chamber 120 and a second chamber 130. The second chamber 130 is located above and communicates with the first chamber 120, and has an inner diameter larger than that of the first chamber 120. The hollow sleeve 100 is provided on an inner wall surface at a joint of the first chamber 120 and the second chamber 130 with a beveled stop shoulder 140. A hollow inflation-valve connecting head 150 is integrally formed on the hollow sleeve 100 below the central partition 110. An inner wall surface of the inflation-valve connecting head 150 is provided with a first inner thread section 152. A gas mouth assembly "a" is provided at a lower inner side of the hollow sleeve 100. In a feasible embodiment of the gas mouth assembly "a", there is included a mounting hole 112 being formed on and extended through a central area of the central partition 110 to communicate the first chamber 120 with an inner space of the inflation-valve connecting head 150, a gas mouth 500 being firmlymounted in the mounting hole 112 from a lower side of the central partition 110, a fourth annular groove 160 being formed around an inner wall surface of the inflation-valve connecting head 150 at a joint with the central partition 110, and a washer 162 being fitted in the fourth annular groove 160 for tightly encircling the gas mouth 500 and thereby holding the gas mouth 500 in place.

The first valve body 200 is located in the first chamber 120, and is in the form of an upward tapered long stem having a flat head 210. A radially outward flange 220 is formed at a lower end of the first valve body 200, and a downward projected ring 230 is formed below the flange 220. An airtight washer 240 is put around a portion of the first valve body 200 immediately above the flange 220. A first compression spring 122 is located below the first valve body 200 to apply an elastic force against the first valve body 200 for the latter to move axially in the first chamber 120.

The second valve body 300 is located in the second chamber 130, and is in the form of a hollow cylinder defining a through hole 310 extended along an axis of the cylinder, such that the head 210 of the first valve 200 may be received in the through hole 310. A second compression spring 132 is located above the second valve body 300 to apply an elastic force against the second valve body 300 for the latter to move axially in the second chamber 130. The second valve body 300 is formed around an outer wall surface closely below an upper end thereof with a downward and inward inclined section 320, on which a first annular groove 322 is formed for receiving a first airtight gasket 324 therein. The second chamber 130 is formed on an inner wall surface with an inclined shoulder section 133 corresponding to the inclined section 320 of the second valve body 300, such that when the second valve body 300 is moved downward by the elastic force of the second compression spring 132, the first airtight gasket 324 at the inclined section 320 may be pressed against the inclined shoulder section 133 to completely isolate a space below the second valve body 300 from a space above the second valve body 300. At least one release port 135 is formed on the wall of the second chamber 130 between the inclined shoulder section 133 and the beveled stop shoulder 140, so that surplus gas in the first chamber 120 is released via the release port 135. The second valve body 300 is also formed around the outer wall surface closely above a lower end thereof with a second annular groove 330 for receiving a second airtight gasket 332 therein. The second airtight gasket 332 is located corresponding to the beveled stop shoulder 140, such that when the second valve body 300 is moved downward to reach a bottom of the second chamber 130, the second airtight gasket 332 is pressed against the beveled stop shoulder 140 to provide a gas sealing effect thereat. A protective screen 136 is mounted around an outer wall surface of the hollow sleeve 100 corresponding to the release port 135, so as to prevent insects, dust, and impurities from entering into the release port 135.

The gas inlet connector 400 is axially mounted in an upper part of the second chamber 130 of the hollow sleeve 100, and defines along an axis thereof a gas inlet 410. The gas inlet connector 400 is provided around a middle outer wall surface with a radially outward flange 420, and around a lower outer wall surface with an externally threaded section 430, against a bottom surface of which an upper end of the second compression spring 132 is pressed. The second chamber 130 is also provided on the inner wall surface with a second inner thread section 138 corresponding to the externally threaded section 430 of the gas inlet connector 400, so that the gas inlet connector 400 may be screwed to an upper part of the second chamber 130. When a depth by which the gas inlet connector 400 is screwed into the second chamber 130 is changed, a magnitude of the elastic force applied by the second compression spring 132 on the second valve body 300 is changed, accordingly. Therefore, it is possible to adjust a pressure setting by screwing the gas inlet connector 400 into the second chamber 130 to a different depth. The gas inlet connector 400 is formed above the externally threaded section 430 with a third annular groove 440 for receiving a third airtight gasket 442 therein. When the gas inlet connector 400 is fully screwed into the upper part of the second chamber 130, the third airtight gasket 442 provides a gas sealing effect at a joint of the flange 420 and the hollow sleeve 100.

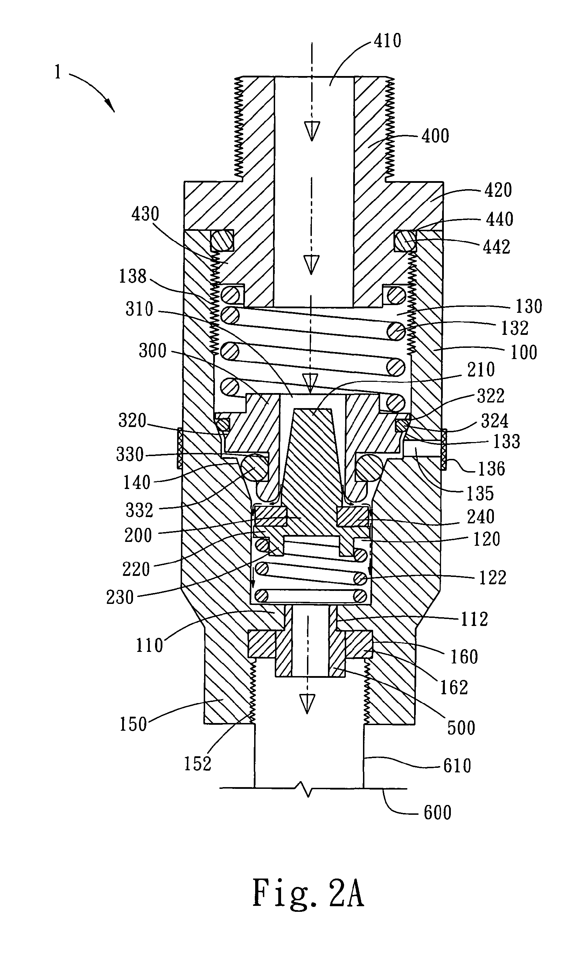

Please refer to Fig. 2A that shows the multifunctional two-way fluid check valve 1 according to the first embodiment of the present invention as shown in Fig. 1 is connected to an inflation valve 610 on a tire 600 to inflate the tire 600. More specifically, the two-way fluid check valve 1 is connected to the inflation valve 610 with the inflation-valve connecting head 150 and the gas mouth 500 mounted on the inflation valve 610. A high-pressure gas from a gas source is admitted into the hollow sleeve 100 via the gas inlet 410 of the gas inlet connector 400. The high-pressure gas sequentially flows through the gas inlet 410 and the second chamber 130 to push against the first valve body 200, so that the first valve body 200 overcomes the upward elastic force of the first compression spring 122 and moves downward, allowing the high-pressure gas to pass through the through hole 310 of the second valve body 300 into the first chamber 120, and then sequentially flows through the gas mouth 500, the inflation-valve connecting head 150, and the inflation valve 610 into the tire 600 to inflate the same.

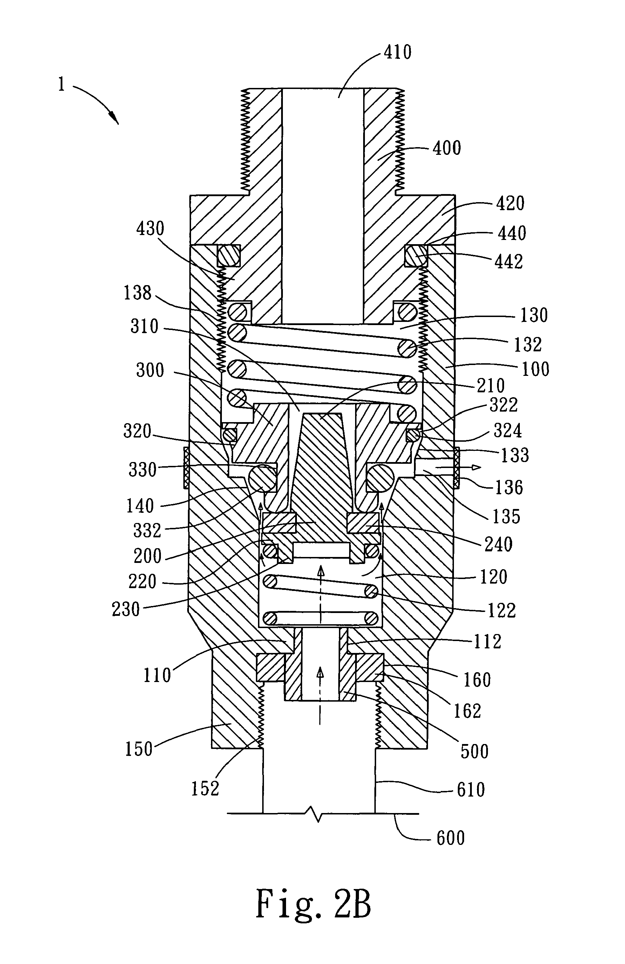

Fig. 2B shows a state of the multifunctional two-way fluid check valve 1 shown in Fig. 2A when the inflated tire exceeds a pressure setting therefor. As having been mentioned above, a pressure setting may be set by screwing the gas inlet connector 400 into the upper part of the second chamber 130 by a predetermined depth. In this first embodiment, when the tire 600 has been inflated to an internal pressure exceeded a pressure setting set for the tire 600 via the gas inlet connector 400, and when the tire internal pressure is great enough to overcome the downward elastic force of the second compression spring 132, the surplus high-pressure gas would flow out the tire 600 via the inflation valve 610 to sequentially flow through the inflation-valve connecting head 150, the gas mouth 500, and the first chamber 120 to push the first valve body 200 upward, so that the first valve body 200 and the second valve body 300 are in tight contact with each other to produce a gas sealing at a joint between them, preventing the high-pressure gas from keeping flowing from the gas source via the two-way fluid check valve 1 into the tire 600. Meanwhile, with the gradually increased internal pressure of the tire 600, the surplus high-pressure gas further pushes the second valve body 300 upward to finally release the airtight contact of the second valve body 300 with the beveled stop shoulder 140, allowing the surplus high-pressure to directly release from the hollow sleeve 100 via the release port 135 and thereby maintaining the internal pressure of the tire 600 at an adequate level and preventing extra high-pressure gas from flowing into the tire 600 via the two-way fluid check valve 1.

When the high-pressure gas gradually flows from the tire 600 back into the valve 1 and the internal pressure of the tire 600 gradually decreases to finally reach the pressure setting for the tire 600, the second compression spring 132 elastically pushes the second valve body 300 downward until the second valve body 300 reaches the bottom of the second chamber 130, causing the second airtight gasket 332 to press against the beveled stop shoulder 140 to produce a gas sealing thereat, as shown in Fig. 1. At this point, the release of the surplus high-pressure gas stops, and the tire 600 is maintained at a predetermined internal pressure.

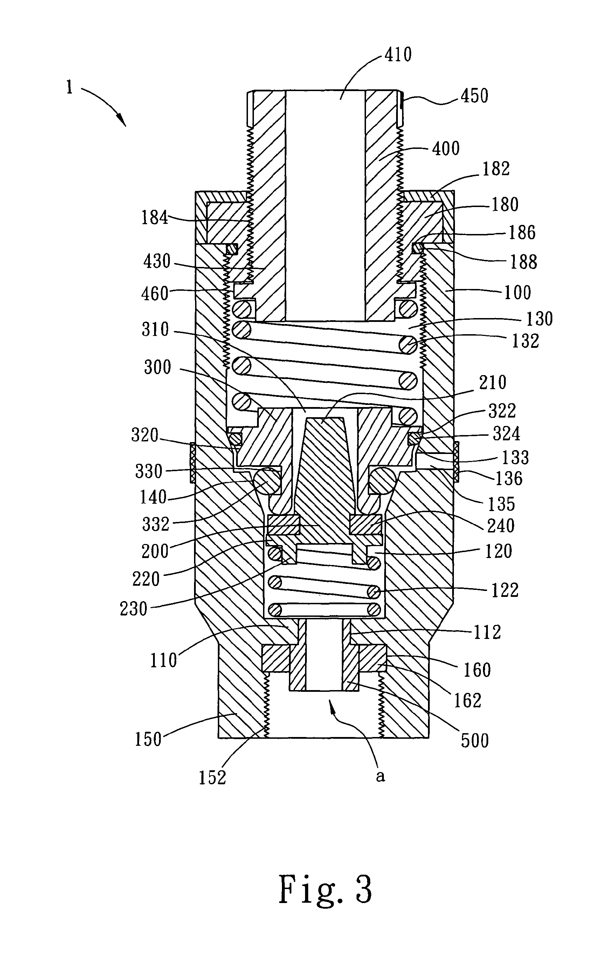

Please refer to Fig. 3 that is a vertical sectional view of a multifunctional two-way fluid check valve 1 according to a second embodiment of the present invention. The second embodiment is generally structurally similar to the first embodiment, but has a gas inlet connector 400 connected to the hollow sleeve 100 in a different manner. As shown, in the second embodiment of the present invention, there is an annular cap 180 screwed to an upper end of the second chamber 130. The annular cap 180 is provided at a top surface with a graduated ring 182. Graduations indicating pressure settings are provided on a top and a circumferential surface of the graduated ring 182. The gas inlet connector 400 defines along an axis thereof a gas inlet 410, and is provided around a lower outer wall surface with an externally threaded section 430. The annular cap 180 is provided on an inner wall surface with a third inner thread section 184 for meshing with the threaded section 430. The gas inlet connector 400 is also provided around an outer wall surface below the threaded section 430 with a radially outward lip portion 460, against a bottom surface of which an upper end of the second compression spring 132 is pressed. Moreover, the gas inlet connector 400 is provided around an outer wall surface above the threaded section 430 with a scale pointer 450. With these arrangements, the gas inlet connector 400 may be screwed through the annular cap 180 into an upper part of the second chamber 130. When a depth by which the gas inlet connector 400 is screwed into the second chamber 130 is changed, a magnitude of the elastic force applied by the second compression spring 132 on the second valve body 300 is changed, accordingly. Therefore, it is possible to adjust a pressure setting by screwing the gas inlet connector 400 into the second chamber 130 to a different depth. Meanwhile, the pressure setting so determined may be read from a graduation on the graduated ring 182 corresponding to the scale pointer 450 on the gas inlet connector 400. The annular cap 180 is provided around a circumferential surface screwed to the hollow sleeve 100 with an eighth annular groove 186 for receiving an eighth airtight gasket 188 therein. When the annular cap 180 is screwed into the upper part of the second chamber 130, the eighth airtight gasket 188 provides a gas sealing at the upper end of the second chamber 130.

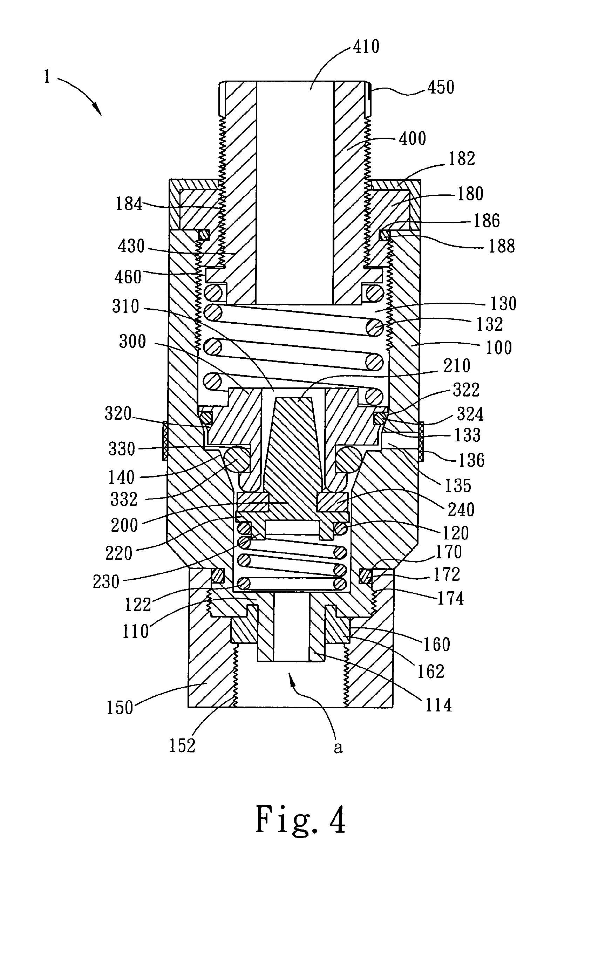

Fig. 4 is a vertical sectional view of a multifunctional two-way fluid check valve according to a third embodiment of the present invention. Third embodiment is generally structurally similar to the previous embodiments, except that the inflation-valve connecting head 150 is detachably connected to the hollow sleeve 100 instead of being integrally formed thereon. As shown, in the third embodiment, the hollow sleeve 100 has an externally threaded lower end, to which the inflation-valve connecting head 150 is screwed. A fifth annular groove 170 is formed on the hollow sleeve 100 above the externally threaded lower end for receiving a fifth airtight gasket 172 therein. A gas mouth 114 is integrally formed at a central area of the central partition 110 of the hollow sleeve 100. As in the first embodiment, the inflation-valve connecting head 150 is provided with a first inner thread section 152 and a fourth annular groove 160 having a washer 162 received therein to encircle the gas mouth 114. With the inflation-valve connecting head 150 detachably connected to the hollow sleeve 100, the two-way fluid check valve 1 can be more easily manufactured.

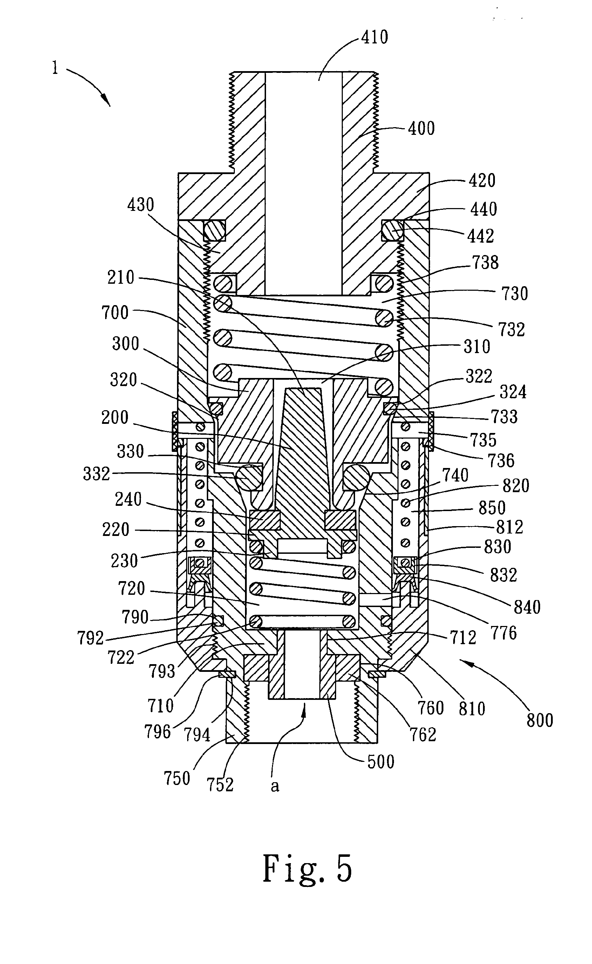

Please refer to Fig. 5 that is a vertical sectional view of a multifunctional two-way fluid check valve according to a fourth embodiment of the present invention. As shown, the two-way fluid check valve 1 of the fourth embodiment includes a hollow sleeve 700, a gas inlet connector 400, a first valve body 200, a second valve body 300, a gas mouth 500, and a pressure indicating mechanism 800.

The hollow sleeve 700 is a hollow tubular member having a central partition 710 formed therein. An inner space of the hollow sleeve 700 above the central partition 710 defines a first chamber 720 and a second chamber 730. The second chamber 730 is located above and communicates with the first chamber 720, and has an inner diameter larger than that of the first chamber 720. The hollow sleeve 700 is provided on an inner wall at a joint of the first chamber 720 and the second chamber 730 with a beveled stop shoulder 740. A hollow inflation-valve connecting head 750 is integrally formed on the hollow sleeve 700 below the central partition 710. An inner wall surface of the inflation-valve connecting head 750 is provided with a first inner thread section 752. A gas mouth assembly "a" is provided at a lower inner side of the hollow sleeve 700. In a feasible embodiment of the gas mouth assembly "a", there is included a mounting hole 712 being formed on and extended through a central area of the central partition 710 to communicate the first chamber 720 with an inner space of the inflation-valve connecting head 750, a gas mouth 500 being firmly mounted in the mounting hole 712 from a lower side of the central partition 710, a fourth annular groove 760 being formed around an inner wall surface of the inflation-valve connecting head 750 at a joint with the central partition 710, and a washer 762 being fitted in the fourth annular groove 760 for tightly encircling the gas mouth 500 and thereby holding the gas mouth 500 in place.

The first valve body 200 is located in the first chamber 720, and is in the form of an upward tapered long stem having a flat head 210. A radially outward flange 220 is formed at a lower end of the first valve body 200, and a downward projected ring 230 is formed below the flange 220. An airtight washer 240 is put around a portion of the first valve body 200 immediately above the flange 220. A first compression spring 722 is located below the first valve body 200 to apply an elastic force against the first valve body 200 for the latter to move axially in the first chamber 720.

The second valve body 300 is located in the second chamber 730, and is in the form of a hollow cylinder defining a through hole 310 extended along an axis of the cylinder, such that the head 210 of the first valve 200 may be received in the through hole 310. A second compression spring 732 is located above the second valve body 300 to apply an elastic force against the second valve body 300 for the latter to move axially in the second chamber 730. The second valve body 300 is formed around an outer wall surface closely below an upper end thereof with a downward and inward inclined section 320, on which a first annular groove 322 is formed for receiving a first airtight gasket 324 therein. The second chamber 730 is formed on an inner wall surface with an inclined shoulder section 733 corresponding to the inclined section 320 of the second valve body 300, such that when the second valve body 300 is moved downward by the elastic force of the second compression spring 732, the first airtight gasket 324 at the inclined section 320 may be pressed against the inclined shoulder section 733 to completely isolate a space below the second valve body 300 from a space above the second valve body 300. At least one release port 735 is formed on the wall of the second chamber 730 between the inclined shoulder section 733 and the beveled stop shoulder 740, so that surplus gas in the first chamber 720 is released via the release port 735. The second valve body 300 is also formed around the outer wall surface closely above a lower end thereof with a second annular groove 330 for receiving a second airtight gasket 332 therein. The second airtight gasket 332 is located corresponding to the beveled stop shoulder 740, such that when the second valve body 300 is moved downward to reach a bottom of the second chamber 730, the second airtight gasket 332 is pressed against the beveled stop shoulder 740 to provide a gas sealing effect thereat.

The gas inlet connector 400 is axially mounted in an upper part of the second chamber 730 of the hollow sleeve 700, and defines along an axis thereof a gas inlet 410.

The gas inlet connector 400 is provided around a middle outer wall surface with a radially outward flange 420, and around a lower outer wall surface with an externally threaded section 430, against a bottom surface of which an upper end of the second compression spring 732 is pressed. The second chamber 730 is also provided on the inner wall surface with a second inner thread section 738 corresponding to the externally threaded section 430 of the gas inlet connector 400, so that the gas inlet connector 400 may be screwed to an upper part of the second chamber 730. When a depth by which the gas inlet connector 400 is screwed into the second chamber 730 is changed, a magnitude of the elastic force applied by the second compression spring 732 on the second valve body 300 is changed, accordingly. Therefore, it is possible to adjust a pressure setting by screwing the gas inlet connector 400 into the second chamber 730 to a different depth. The gas inlet connector 400 is formed above the externally threaded section 430 with a third annular groove 440 for receiving a third airtight gasket 442 therein. When the gas inlet connector 400 is fully screwed into the upper part of the second chamber 730, the third airtight gasket 442 provides a gas sealing effect at a joint of the flange 420 and the hollow sleeve 700.

The pressure indicating mechanism 800 includes an outer cover 810, a third compression spring 820, an annular bearer 830, and a floating ring 840. The outer cover 810 is made of a transparent material, and is screwed to and thereby mounted around a lower part of the hollow sleeve 700, such that an annular chamber 850 is formed between an inner wall surface of the outer cover 810 and an outer wall surface of the hollow sleeve 700. At least one through hole 776 is formed on a wall of the hollow sleeve 700 between the first chamber 720 and the annular chamber 850 to communicate the first chamber 720 with the annular chamber 850. The annular chamber 850 is also communicable with the release port 735 to thereby communicate with outside of the two-way fluid check valve 1. The third compression spring 820 is located in the annular chamber 850, and the annular bearer 830 and the floating ring 840 are sequentially located below the third compression spring 820 to bear a downward elastic force of the third compression spring 820 applied thereon and thereby axially movable up or down in the annular chamber 850. The hollow sleeve 700 is provided on an outer wall surface below the through hole 776 with a sixth annular groove 790 for receiving a sixth airtight gasket 792 therein. When the outer cover 810 is screwed to the hollow sleeve 700, the sixth airtight gasket 792 produces a gas sealing thereat.

Moreover, the inflation-valve connecting head 750 below the hollow sleeve 700 is provided on an outer wall surface just below a lower end of the outer cover 810 with a seventh annular groove 794 for receiving a stop ring 796 therein, so as to stop the outer cover 810 from displacing after it has been screwed to the hollow sleeve 700. The stop ring 796 may be, for example, a C-ring. A protective screen 736 is mounted around an outer wall surface of the hollow sleeve 700 corresponding to the release port 735, so as to prevent insects, dust, and impurities from entering into the release port 735.

A first pressure-indicating color ring 812, such as a green ring, is provided around the outer wall surface of the outer cover 810 at a predetermined position, and a second pressure-indicating color ring 832, such as a red ring, is provided on an outer surface of the annular bearer 830. When a high-pressure gas is supplied into the two-way fluid check valve 1, a part of the high-pressure gas in the first chamber 720 flows via the through hole 776 into a space of the annular chamber 850 below the floating ring 840. And, when the pressure below the floating ring 840 is greater than the pressure above the annular bearer 830, the floating ring 840 and the annular bearer 830 are pushed upward by the high-pressure gas. When the floating ring 840 reaches a level in the annular chamber 850 as high as the first pressure-indicating color ring 812, it means a preset pressure setting has been reached, and the supply of high-pressure gas should then be stopped . At this point, only the green ring, that is, the first pressure-indicating color ring 812, can be seen from outside of the two-way fluid check valve 1.

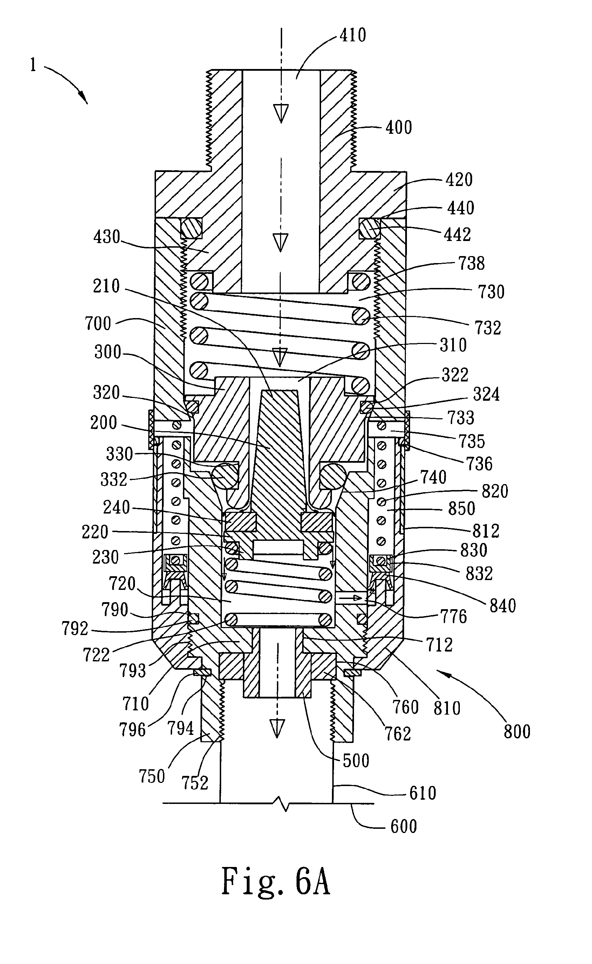

Fig. 6A shows the multifunctional two-way fluid check valve 1 according to the fourth embodiment of the present invention as shown in Fig. 5 is connected to an inflation valve 610 on a tire 600 to inflate the tire 600. More specifically, the two-way fluid check valve 1 is connected to the inflation valve 610 with the inflation-valve connecting head 750 and the gas mouth 500 mounted on the inflation valve 610. A high-pressure gas from a gas source is admitted into the hollow sleeve 700 via the gas inlet 410 of the gas inlet connector 400. The high-pressure gas sequentially flows through the gas inlet 410 and the second chamber 730 to push against the first valve body 200, so that the first valve body 200 overcomes the upward elastic force of the first compression spring 722 and moves downward, allowing the high-pressure gas to pass through the through hole 310 of the second valve body 300 into the first chamber 720, and then sequentially flows through the gas mouth 500, the inflation-valve connecting head 750, and the inflation valve 610 into the tire 600 to inflate the same.

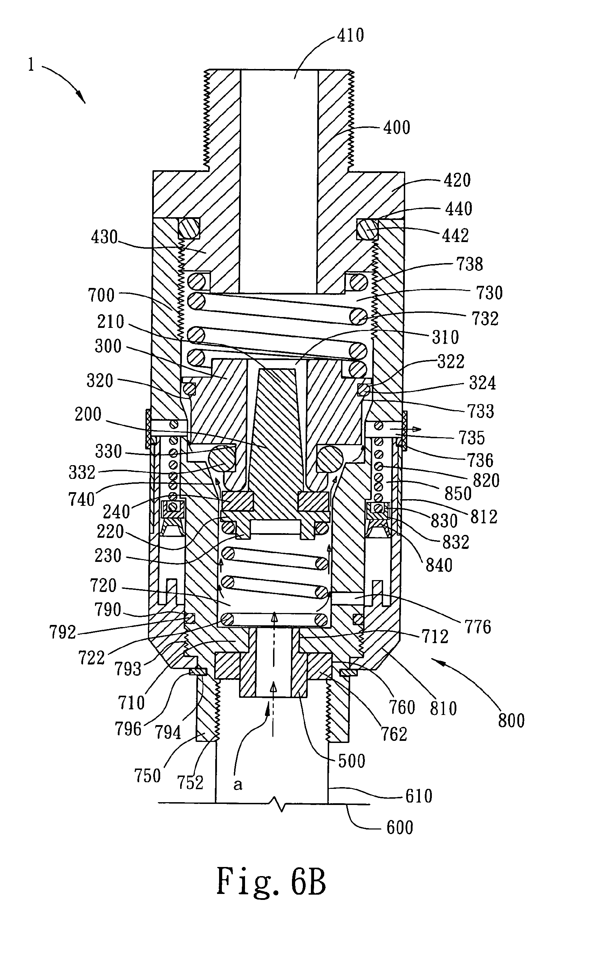

Fig. 6B shows a state of the multifunctional two-way fluid check valve 1 shown in Fig. 6A when the inflated tire exceeds a pressure setting therefor. As having been mentioned above, a pressure setting may be set by screwing the gas inlet connector 400 into the upper part of the second chamber 730 by a predetermined depth. In this fourth embodiment, when the tire 600 has been inflated to an internal pressure exceeding a pressure setting set for the tire 600 via the gas inlet connector 400, and when the tire internal pressure is great enough to overcome the downward elastic force of the second compression spring 732, the surplus high-pressure gas would flow out the tire 600 via the inflation valve 610 to sequentially flow through the inflation-valve connecting head 750, the gas mouth 500, and the first chamber 720 to push the first valve body 200 upward, so that the first valve body 200 and the second valve body 300 are in tight contact with each other to produce a gas sealing at a joint between them, preventing the high-pressure gas from keeping flowing from the gas source via the two-way fluid check valve 1 into the tire 600. Meanwhile, with the gradually increased internal pressure of the tire 600, the surplus high-pressure gas further pushes the second valve body 300 upward to finally release the airtight contact of the second airtight gasket 332 on the second valve body 300 with the beveled stop shoulder 740, allowing the surplus high-pressure to directly release from the hollow sleeve 700 via the release port 735 and thereby maintaining the internal pressure of the tire 600 at an adequate level and preventing extra high-pressure gas from flowing into the tire 600 via the two-way fluid check valve 1.

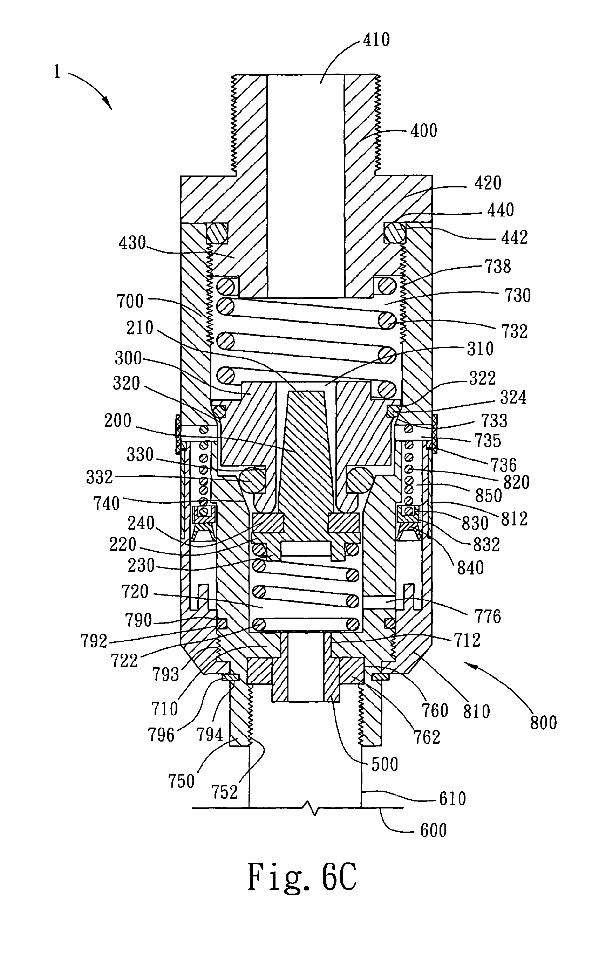

Please refer to Fig. 6C that shows a state of the multifunctional two-way fluid check valve of Fig. 6A when the inflated tire reaches a pressure setting therefor. As having been mentioned in the above paragraph with reference to Fig. 6B, when the internal pressure of the tire 600 has exceeded the pressure setting thereof, the surplus high-pressure gas gradually flows out the valve 1 via the release port 735, and the internal pressure of the tire 600 gradually decreases at the same time to finally reach the pressure setting for the tire 600, the second compression spring 732 elastically pushes the second valve body 300 downward until the second valve body 300 reaches the bottom of the second chamber 730, causing the second airtight gasket 332 to press against the beveled stop shoulder 740 to produce a gas sealing thereat. At this point, the release of the surplus high-pressure gas stops, and the tire 600 is maintained at a predetermined internal pressure.

Since the internal pressure of the tire 600 communicates with the annular chamber 850 via the gas mouth 500 and the through hole 776, the tire internal pressure is directly reflected in the annular chamber 850. When the internal pressure of the inflated tire 600 gradually increases, the pressure of gas flown into the annular chamber 850 also increases, accordingly, to push the floating ring 840 and the annular bearer 830 upward. When the internal pressure of the inflated tire 600 reaches the preset pressure setting, the annular bearer 830 is moved upward to a position beyond the first pressure-indicating green ring 812, so that the second pressure-indicating red ring 832 is shielded by the green ring 812 and only the first pressure-indicating green ring 812 is visible from outside of the transparent outer cover 800, indicating the tire 600 has reached its pressure setting.

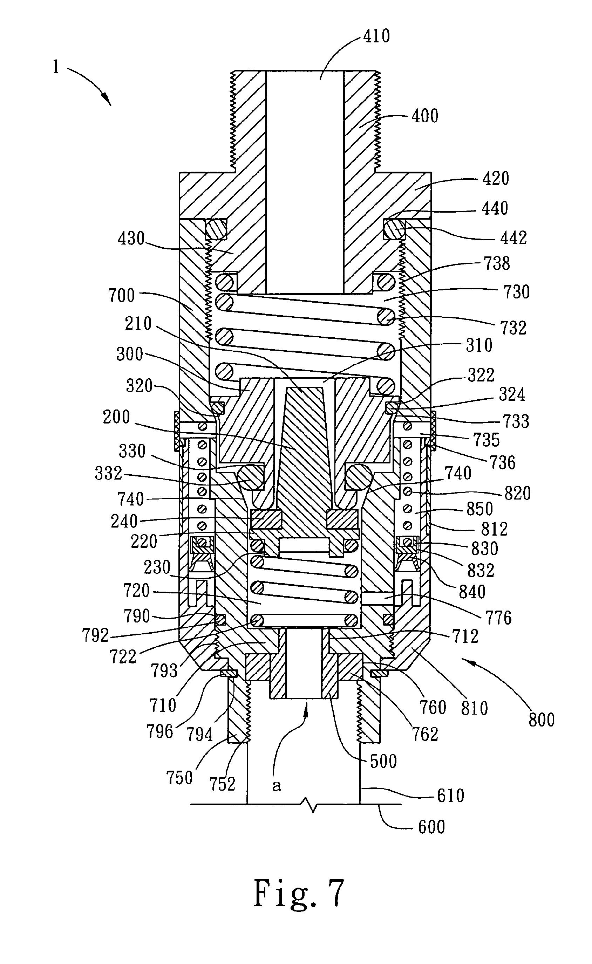

Fig. 7 shows a state of the multifunctional two-way fluid check valve of Fig. 6A when the inflated tire 600 has not reached the pressure setting therefor. As shown, when the tire 600 has been used over a long period of time, the internal pressure of the tire 600 tends to gradually decrease due to leakage or other external factors. At this point, the internal pressure of the space of the annular chamber 850 below the floating ring 840 of the pressure indicating mechanism 800 decreases accordingly, causing the annular bearer 830 and the floating ring 840 to move downward with the decrease of the tire internal pressure. When the annular bearer 830 moves downward to a position lower than the first pressure-indicating green ring 812, the second pressure-indicating red ring 832 is visible from outside of the outer cover 810 to provide a warning sign, informing a user that the tire 600 has an insufficient internal pressure.

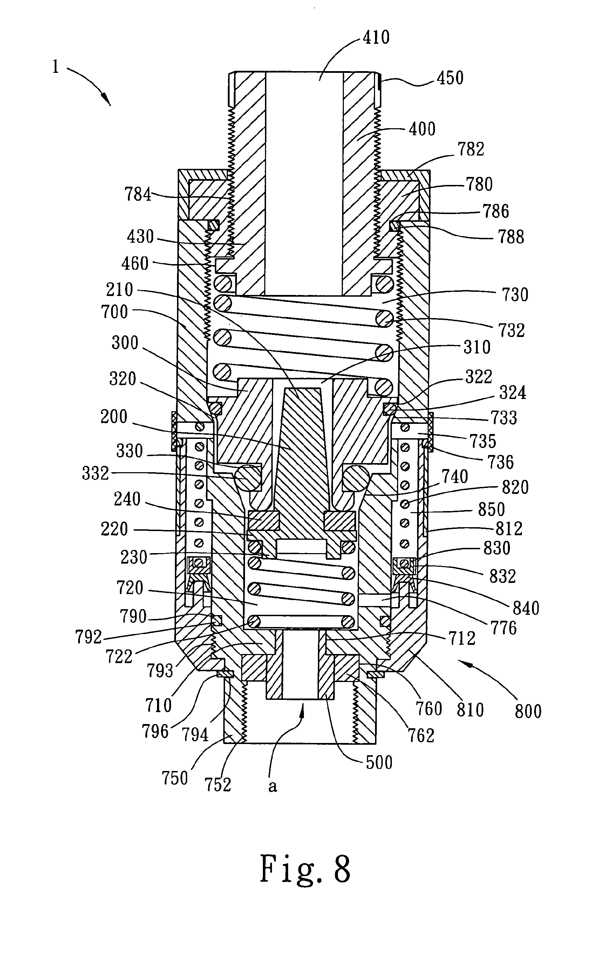

Fig. 8 is a vertical sectional view of a multifunctional two-way fluid check valve according to a fifth embodiment of the present invention. The fifth embodiment is generally structurally similar to the fourth embodiment, but has a gas inlet connector 400 connected to the hollow sleeve 700 in a different manner. As shown, in the fifth embodiment of the present invention, there is an annular cap 780 screwed to an upper end of the second chamber 730. The annular cap 780 is provided at a top surface with a graduated ring 782. Graduations indicating pressure settings are provided on a top and a circumferential surface of the graduated ring 782. The gas inlet connector 400 defines along an axis thereof a gas inlet 410, and is provided around a lower outer wall surface with an externally threaded section 430. The annular cap 780 is provided on an inner wall surface with a third inner thread section 784 for meshing with the threaded section 430. The gas inlet connector 400 is also provided around an outer wall surface below the threaded section 430 with a radially outward lip portion 460, against a bottom surface on which an upper end of the second compression spring 732 is pressed. Moreover, the gas inlet connector 400 is provided around an outer wall surface above the threaded section 430 with a scale pointer 450. With these arrangements, the gas inlet connector 400 may be screwed through the annular cap 780 to extend into an upper part of the second chamber 730. When a depth by which the gas inlet connector 400 is screwed into the second chamber 730 is changed, a magnitude of the elastic force applied by the second compression spring 732 on the second valve body 300 is changed, accordingly. Therefore, it is possible to adjust a pressure setting by screwing the gas inlet connector 400 into the second chamber 730 to a different depth.

Meanwhile, the pressure setting so determined may be read from a graduation on the graduated ring 782 corresponding to the scale pointer 450 on the gas inlet connector 400. The annular cap 780 is provided around a circumferential surface screwed to the hollow sleeve 700 with an eighth annular groove 786 for receiving an eighth airtight gasket 788 therein. When the annular cap 780 is screwed into the upper part of the second chamber 730, the eighth airtight gasket 788 provides a gas sealing at the upper end of the second chamber 730.

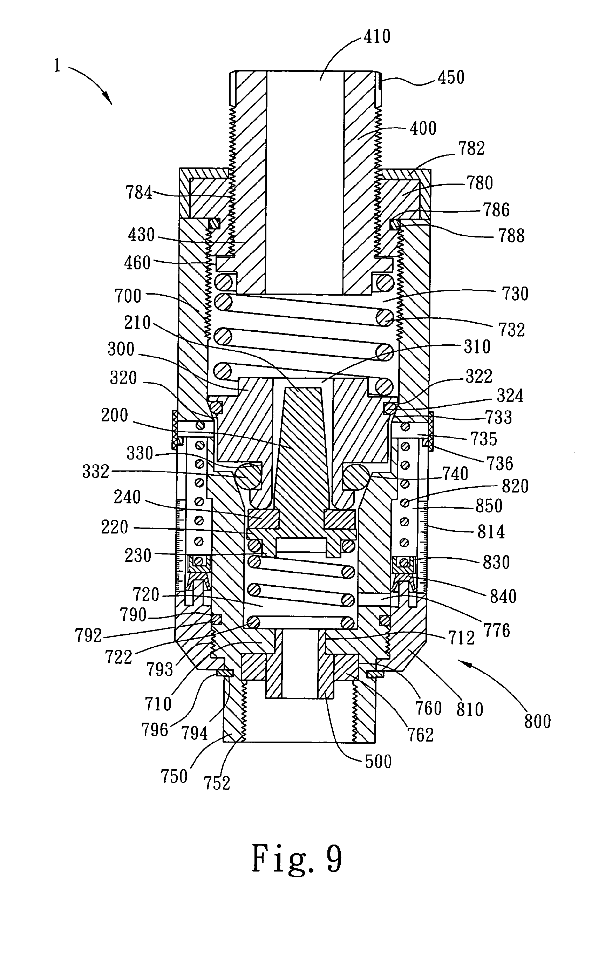

Fig. 9 is a vertical sectional view of a multifunctional two-way fluid check valve according to a sixth embodiment of the present invention. This sixth embodiment is generally structurally similar to the fifth embodiment, except that a pressure-indicating scale 814 replaces the first pressure-indicating color ring 812 to locate around the outer cover 810. From a graduation on the pressure-indication scale 814 corresponding to a position of the floating ring 840 in the annular chamber 850, it is possible to directly read the internal pressure of the inflated tire.

Moreover, by adjusting a depth by which the outer cover 810 is screwed to the lower end of the hollow sleeve 700, it is possible to adjust a magnitude of the elastic force applied by the third compression spring 820 onto the annular bearer 830 and the floating ring 840, and thereby adjust a sensitivity and allowance of the indicated tire pressure.

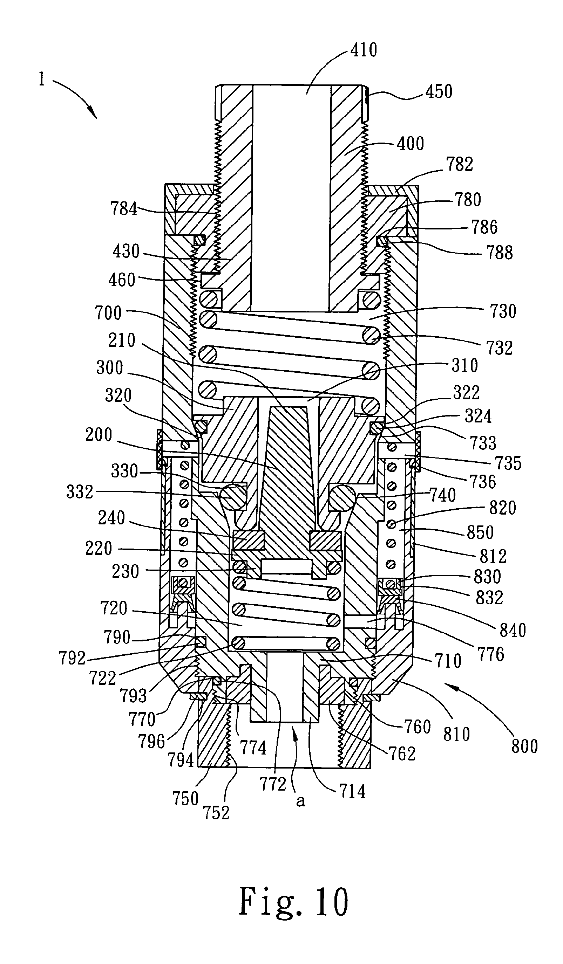

Please refer to Fig. 10 that is a vertical sectional view of a multifunctional two-way fluid check valve according to a seventh embodiment of the present invention. The seventh embodiment is generally structurally similar to the fourth and fifth embodiments, except that the inflation-valve connecting head 750 is detachably connected to the hollow sleeve 700 instead of being integrally formed thereon. As shown, in the seventh embodiment, the hollow sleeve 700 has an externally threaded lower end, to which the inflation-valve connecting head 750 is screwed. A fifth annular groove 770 is formed on the hollow sleeve 700 above the externally threaded lower end for receiving a fifth airtight gasket 772 therein. A gas mouth 714 is integrally formed at a central area of the central partition 710 of the hollow sleeve 700. As in the fourth and fifth embodiments, the inflation-valve connecting head 750 is provided with a first inner thread section 752 and a fourth annular groove 760 having a washer 762 received therein to encircle the gas mouth 714. The inflation-valve connecting head 750 below the hollow sleeve 700 is also provided on an outer wall surface just below a lower end of the outer cover 810 with a seventh annular groove 794 for receiving a stop ring 796 therein, so as to stop the outer cover 810 from displacing after it has been screwed to the hollow sleeve 700. The stop ring 796 may be, for example, a C-ring.

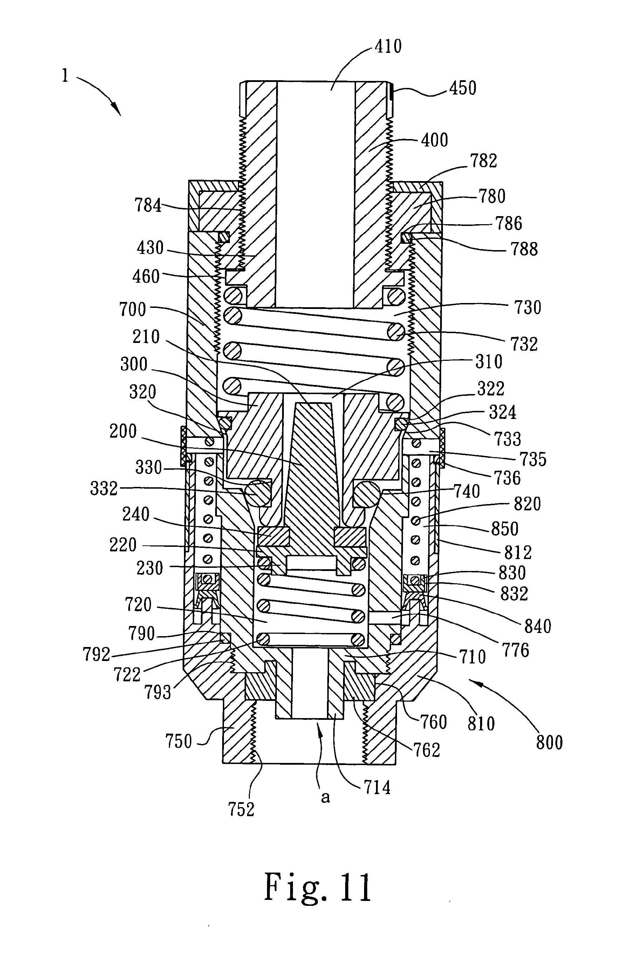

Please refer to Fig. 11 that is a vertical sectional view of a multifunctional two-way fluid check valve according to an eighth embodiment of the present invention. Like the seventh embodiment, the eighth embodiment has a hollow sleeve 700 and an inflation-valve connecting head 750 detachably connected to one another. However, in the eighth embodiment, the inflation-valve connecting head 750 is integrally formed below the outer cover 810 before being assembled to the hollow sleeve 700, so that the inflation-valve connecting head 750 is located at a lower end of the hollow sleeve 700. Similarly, the eighth embodiment has a gas mouth 714 integrally formed at a central area of a central partition 710 of the hollow sleeve 700; and the inflation-valve connecting head 750 is provided with a first inner thread section 752 and a fourth annular groove 760 having a washer 762 received therein to encircle the gas mouth 714. The eighth embodiment has reduced number of components and can be more conveniently assembled, compared to the seventh embodiment.

The present invention has been described with some preferred embodiments thereof and it is understood that many changes and modifications in the described embodiments can be carried out without departing from the scope and the spirit of the invention that is intended to be limited only by the appended claims.

## Claims

1. A multifunctional two-way fluid check valve, comprising:
a hollow sleeve in the form of a hollow tubular member having a central partition formed therein, an inner space of said hollow sleeve above said central partition defining a first chamber and a second chamber located above and communicating with said first chamber; said hollow sleeve being provided on an inner wall surface at a joint of said first and said second chamber with a beveled stop shoulder; a hollow inflation-valve connecting head being provided on said hollow sleeve below said central partition, and a gas mouth assembly being provided at a lower inner side of said hollow sleeve;
a first valve body being located in said first chamber and in the form of an upward tapered long stem having a flat head, a radially outward flange being formed at a lower end of said first valve body, and a first compression spring being located below said flange to allow said first valve body to elastically move axially in said first chamber; a second valve body being located in said second chamber and in the form of a hollow cylinder defining a through hole extended along an axis of the cylinder, such that said head of said first valve may be received in said through hole; a second compression spring being located above said second valve body to allow said second valve body to elastically move axially in said second chamber; said second valve body being formed around an outer wall surface with a downward and inward inclined section, on which a first annular groove being formed for receiving a first airtight gasket therein; said second chamber being formed on an inner wall surface with an inclined shoulder section corresponding to said inclined section on said second valve body, such that when said secondvalve body is elastically moved downward, said first airtight gasket at said inclined section is pressed against said inclined shoulder section; at least one release port being formed on a wall of said second chamber between said inclined shoulder section on said second chamber and said beveled stop shoulder on said hollow sleeve; said second valve body being also formed around the outer wall surface closely above a lower end thereof with a second annular groove for receiving a second airtight gasket therein, and said second airtight gasket being located corresponding to said beveled stop shoulder; and
a gas inlet connector being axially mounted in an upper part of said second chamber of said hollow sleeve, and defining along an axis thereof a gas inlet.

2. The multifunctional two-way fluid check valve as claimed in claim 1, wherein said second chamber has an inner diameter larger than that of said first chamber.

3. The multifunctional two-way fluid check valve as claimed in claim 1, wherein said inflation-valve connecting head is integrally formed on said hollow sleeve, and a mounting hole is formed on and extended through a central area of said central partition for a gas mouth to firmly mount in said mounting hole; and said inflation-valve connecting head being provided on an inner wall surface with a first inner thread section, and at a joint of the inner wall surface and said the central partition with a fourth annular groove for a washer to fit therein and tightly encircle said gas mouth.

4. The multifunctional two-way fluid check valve as claimed in claim 1, wherein said inflation-valve connecting head is detachably connected to said hollow sleeve.

5. The multifunctional two-way fluid check valve as claimed in claim 4, wherein said inflation-valve connecting head is screwed to a lower outer wall surface of said hollow sleeve, and said central partition of said hollow sleeve is integrally formed at a central area with a gas mouth; and wherein said inflation-valve connecting head is provided on an inner wall surface with a first inner thread section, and at a joint of the inner wall surface and said central partition with a fourth annular groove for a washer to fit therein and tightly encircle said gas mouth.

6. The multifunctional two-way fluid check valve as claimed in claim 1, wherein said first valve body is provided below said flange with an axially downward projected ring, and an airtight washer being put around a portion of said first valve body immediately above said flange.

7. The multifunctional two-way fluid check valve as claimed in claim 1, wherein said gas inlet connector is provided around a lower outer wall surface with an externally threaded section, against a bottom surface on which an upper end of said second compression spring is pressed; said second chamber also being provided on the inner wall surface with a second inner thread section corresponding to said externally threaded section on said gas inlet connector, so that said gas inlet connector may be screwed to an upper part of said second chamber.

8. The multifunctional two-way fluid check valve as claimed in claim 1, wherein said hollow sleeve has an annular cap screwed to an upper inner end thereof, said annular cap being provided at a top surface with a graduated ring, and graduations indicating pressure settings being provided on a top and a circumferential surface of said graduated ring; said gas inlet connector being provided around a lower outer wall surface with an externally threaded section, and said annular cap being provided on an inner wall surface with a third inner thread section for meshing with said externally threaded section on said gas inlet connector; said gas inlet connector also being provided around an outer wall surface below said externally threaded section with a radially outward lip portion, against a bottom surface on which an upper end of said second compression spring is pressed; and said gas inlet connector being provided around an outer wall surface above said externally threaded section with a scale pointer corresponding to said graduations on said graduated ring.

9. A multifunctional two-way fluid check valve, comprising:
a hollow sleeve in the form of a hollow tubular member having a central partition formed therein, an inner space of said hollow sleeve above said central partition defining a first chamber and a second chamber located above and communicating with said first chamber; said hollow sleeve being provided on an inner wall surface at a joint of said first and said second chamber with a beveled stop shoulder; a hollow inflation-valve connecting head being provided on said hollow sleeve below said central partition, and a gas mouth assembly being provided at a lower inner side of said hollow sleeve;
a first valve body being located in said first chamber and in the form of an upward tapered long stem having a flat head, a radially outward flange being formed at a lower end of said first valve body, and a first compression spring being located below said flange to allow said first valve body to elastically move axially in said first chamber;
a second valve body being located in said second chamber and in the form of a hollow cylinder defining a through hole extended along an axis of the cylinder, such that said head of said first valve may be received in said through hole; a second compression spring being located above said second valve body to allow said second valve body to elastically move axially in said second chamber; said second valve body being formed around an outer wall surface with a downward and inward inclined section, on which a first annular groove being formed for receiving a first airtight gasket therein; said second chamber being formed on an inner wall surface with an inclined shoulder section corresponding to said inclined section on said second valve body, such that when said second valve body is elastically moved downward, said first airtight gasket at said inclined section is pressed against said inclined shoulder section; at least one release port being formed on a wall of said second chamber between said inclined shoulder section on said second chamber and said beveled stop shoulder on said hollow sleeve; said second valve body being also formed around the outer wall surface closely above a lower end thereof with a second annular groove for receiving a second airtight gasket therein, and said second airtight gasket being located corresponding to said beveled stop shoulder;
a gas inlet connector being axially mounted in an upper part of said second chamber of said hollow sleeve, and defining along an axis thereof a gas inlet; and
a pressure indicating mechanism including an outer cover, a third compression spring, an annular bearer, and a floating ring; said outer cover being made of a transparent material and screwed to and thereby mounted around a lower part of said hollow sleeve, such that an annular chamber is formed between an inner wall surface of said outer cover and an outer wall surface of said hollow sleeve; at least one through hole being formed on a wall of said hollow sleeve between said first chamber and said annular chamber to communicate said first chamber with said annular chamber; said annular chamber being also communicable with said release port to thereby communicate with outside of said two-way fluid check valve; said third compression spring being located in said annular chamber, and said annular bearer and said floating ring being sequentially located below said third compression spring to bear a downward elastic force of said third compression spring applied thereon and thereby axially movable up or down in said annular chamber; and either a first pressure-indicating color ring or a pressure-indicating scale being provided around the outer wall surface of said outer cover at a predetermined position, and a second pressure-indicating color ring showing a color different from that of said first pressure-indicating color ring being provided on an outer surface of said annular bearer.

10. The multifunctional two-way fluid check valve as claimed in claim 9, wherein said second chamber has an inner diameter larger than that of said first chamber.

11. The multifunctional two-way fluid check valve as claimed in claim 9, wherein said inflation-valve connecting head is integrally formed on said hollow sleeve, and a mounting hole is formed on and extended through a central area of said central partition for a gas mouth to firmly mount in said mounting hole; and said inflation-valve connecting head being provided on an inner wall surface with a first inner thread section, and at a joint of the inner wall surface and said the central partition with a fourth annular groove for a washer to fit therein and tightly encircle said gas mouth.

12. The multifunctional two-way fluid check valve as claimed in claim 9, wherein said inflation-valve connecting head is detachably connected to said hollow sleeve.

13. The multifunctional two-way fluid check valve as claimed in claim 12, wherein said inflation-valve connecting head is screwed to a lower outer wall surface of said hollow sleeve, and said central partition of said hollow sleeve is integrally formed at a central area with a gas mouth; and wherein said inflation-valve connecting head is provided on an inner wall surface with a first inner thread section, and at a joint of the inner wall surface and said the central partition with a fourth annular groove for a washer to fit therein and tightly encircle said gas mouth.

14. The multifunctional two-way fluid check valve as claimed in claim 12, wherein said inflation-valve connecting head is integrally formed below said outer cover to locate at a lower end of said hollow sleeve; said central partition of said hollow sleeve is integrally formed at a central area with a gas mouth; and wherein said inflation-valve connecting head is provided on an inner wall surface with a first inner thread section, and at a joint of the inner wall surface and said the central partition with a fourth annular groove for a washer to fit therein and tightly encircle said gas mouth.

15. The multifunctional two-way fluid check valve as claimed in claim 9, wherein said first valve body is provided below said flange with an axially downward projected ring, and an airtight washer being put around a portion of said first valve body immediately above said flange.

16. The multifunctional two-way fluid check valve as claimed in claim 9, wherein said gas inlet connector is provided around a lower outer wall surface with an externally threaded section, against a bottom surface on which an upper end of said second compression spring is pressed; said second chamber also being provided on the inner wall surface with a second inner thread section corresponding to said externally threaded section on said gas inlet connector, so that said gas inlet connector may be screwed to an upper part of said second chamber.

17. The multifunctional two-way fluid check valve as claimed in claim 9, wherein said hollow sleeve has an annular cap screwed to an upper inner end thereof, said annular cap being provided at a top surface with a graduated ring, and graduations indicating pressure settings being provided on a top and a circumferential surface of said graduated ring; said gas inlet connector being provided around a lower outer wall surface with an externally threaded section, and said annular cap being provided on an inner wall surface with a third inner thread section for meshing with said externally threaded section on said gas inlet connector; said gas inlet connector also being provided around an outer wall surface below said externally threaded section with a radially outward lip portion, against a bottom surface on which an upper end of said second compression spring is pressed; and said gas inlet connector being provided around an outer wall surface above said externally threaded section with a scale pointer corresponding to said graduations on said graduated ring.

18. The multifunctional two-way fluid check valve as claimed in claim 9, wherein said hollow sleeve is provided on an outer wall surface below said through hole with a sixth annular groove for receiving a sixth airtight gasket therein.

19. The multifunctional two-way fluid check valve as claimed in claim 9, wherein said inflation-valve connecting head below the hollow sleeve is provided on an outer wall surface just below a lower end of said outer cover with a seventh annular groove for receiving a stop ring therein.

## Amended claims

### Amended claims in accordance with Rule 137(2) EPC.

**1.** A multifunctional two-way fluid check valve, comprising:
a hollow sleeve (100), a central partition (110), a first chamber (120), a second chamber (130), a beveled stop shoulder (140), an inflation-valve connecting head (150), a gas mouth (500), a second valve body (300) and a gas inlet connector (400), wherein said multifunctional two-way fluid check valve is **characterized in that**
said hollow sleeve (100) is in the form of a hollow tubular member having a central partition (110) formed therein, an inner space of said hollow sleeve (100) above said central partition (110) defining a first chamber (120) and a second chamber (130) located above and communicating with said first chamber (120); said hollow sleeve (100) being provided on an inner wall surface at a joint of said first and said second chamber (130) with a beveled stop shoulder (140);
said hollow inflation-valve connecting head (150) is provided on said hollow sleeve (100) below said central partition (110), and a gas mouth (500) assembly being provided at a lower inner side of said hollow sleeve (100);
said first valve body (200) is located in said first chamber (120) and in the form of an upward tapered long stem having a flat head (210), a radially outward flange (220) being formed at a lower end of said first valve body (200), and a first compression spring (122) being located below said flange (220) to allow said first valve body (200) to elastically move axially in said first chamber (120);
said second valve body (300) is located in said second chamber (130) and in the form of a hollow cylinder defining a through hole (310) extended along an axis of the cylinder, such that said head of said first valve may be received in said through hole (310); a second compression spring (132) being located above said second valve body (300) to allow said second valve body (300) to elastically move axially in said second chamber (130); said second valve body (300) being formed around an outer wall surface with a downward and inward inclined section (320), on which a first annular groove (322) being formed for receiving a first airtight gasket (324) therein; said second chamber (130) being formed on an inner wall surface with an inclined shoulder section (133) corresponding to said inclined section (320) on said second valve body (300), such that when said second valve body (300) is elastically moved downward, said first airtight gasket (324) at said inclined section (320) is pressed against said inclined shoulder section (133); at least one release port (135) being formed on a wall of said second chamber (130) between said inclined shoulder section (133) on said second chamber (130) and said beveled stop shoulder on said hollow sleeve (100); said second valve body (300) being also formed around the outer wall surface closely above a lower end thereof with a second annular groove for receiving a second airtight gasket therein, and said second airtight gasket being located corresponding to said beveled stop shoulder (140); and
said gas inlet connector (400) is axially mounted in an upper part of said second chamber (130) of said hollow sleeve (100), and defining along an axis thereof a gas inlet.

**2.** The multifunctional two-way fluid check valve as claimed in claim 4, wherein said inflation-valve connecting head (150) is screwed to a lower outer wall surface of said hollow sleeve (100), and said central partition (110) of said hollow sleeve (100) is integrally formed at a central area with a gas mouth (500); and wherein said inflation-valve connecting head (150) is provided on an inner wall surface with a first inner thread section, and at a joint of the inner wall surface and said central partition (110) with a fourth annular groove (160) for a washer (162) to fit therein and tightly encircle said gas mouth (500).

**3.** The multifunctional two-way fluid check valve as claimed in claim 1, wherein said first valve body (200) is provided below said flange (220) with an axially downward projected ring (230), and an airtight washer (240) being put around a portion of said first valve body (200) immediately above said flange (220).

**4.** The multifunctional two-way fluid check valve as claimed in claim 1, wherein said gas inlet connector (400) is provided around a lower outer wall surface with an externally threaded section (430), against a bottom surface on which an upper end of said second compression spring (132) is pressed; said second chamber (130) also being provided on the inner wall surface with a second inner thread section corresponding to said externally threaded section (430) on said gas inlet connector (400), so that said gas inlet connector (400) may be screwed to an upper part of said second chamber (130).

**5.** The multifunctional two-way fluid check valve as claimed in claim 1, wherein said hollow sleeve (100) has an annular cap screwed to an upper inner end thereof, said annular cap being provided at a top surface with a graduated ring, and graduations indicating pressure settings being provided on a top and a circumferential surface of said graduated ring; said gas inlet connector (400) being provided around a lower outer wall surface with an externally threaded section (430), and said annular cap being provided on an inner wall surface with a third inner thread section for meshing with said externally threaded section (430) on said gas inlet connector (400); said gas inlet connector (400) also being provided around an outer wall surface below said externally threaded section (430) with a radially outward lip portion, against a bottom surface on which an upper end of said second compression spring (132) is pressed; and said gas inlet connector (400) being provided around an outer wall surface above said externally threaded section (430) with a scale pointer corresponding to said graduations on said graduated ring.

**6.** The multifunctional two-way fluid check valve as claimed in claim 1, further comprising:
a pressure indicating mechanism including an outer cover, a third compression spring, an annular bearer, and a floating ring; said outer cover being made of a transparent material and screwed to and thereby mounted around a lower part of said hollow sleeve (100), such that an annular chamber is formed between an inner wall surface of said outer cover and an outer wall surface of said hollow sleeve (100); at least one through hole being formed on a wall of said hollow sleeve (100) between said first chamber (120) and said annular chamber to communicate said first chamber (120) with said annular chamber; said annular chamber being also communicable with said release port (135) to thereby communicate with outside of said two-way fluid check valve; said third compression spring being located in said annular chamber, and said annular bearer and said floating ring being sequentially located below said third compression spring to bear a downward elastic force of said third compression spring applied thereon and thereby axially movable up or down in said annular chamber; and either a first pressure-indicating color ring or a pressure-indicating scale being provided around the outer wall surface of said outer cover at a predetermined position, and a second pressure-indicating color ring showing a color different from that of said first pressure-indicating color ring being provided on an outer surface of said annular bearer.

**7.** The multifunctional two-way fluid check valve as claimed in claim 1 or 6, wherein said second chamber (130) has an inner diameter larger than that of said first chamber (120).

**8.** The multifunctional two-way fluid check valve as claimed in claim 1 or 6, wherein said inflation-valve connecting head (150) is integrally formed on said hollow sleeve (100), and a monting hole (112) is formed on and extended through a central area of said central partition (110) for a gas mouth (500) to firmly mount in said monting hole (112); and said inflation-valve connecting head (150) being provided on an inner wall surface with a first inner thread section, and at a joint of the inner wall surface and said the central partition (110) with a fourth annular groove (160) for a washer (162) to fit therein and tightly encircle said gas mouth (500).

**9.** The multifunctional two-way fluid check valve as claimed in claim 1 or 6, wherein said inflation-valve connecting head (150) is detachably connected to said hollow sleeve (100).

**10.** The multifunctional two-way fluid check valve as claimed in claim 9, wherein said inflation-valve connecting head (150) is screwed to a lower outer wall surface of said hollow sleeve (100), and said central partition (110) of said hollow sleeve (100) is integrally formed at a central area with a gas mouth (500); and wherein said inflation-valve connecting head (150) is provided on an inner wall surface with a first inner thread section, and at a joint of the inner wall surface and said the central partition (110) with a fourth annular groove (160) for a washer (162) to fit therein and tightly encircle said gas mouth (500).

**11.** The multifunctional two-way fluid check valve as claimed in claim 9, wherein said inflation-valve connecting head (150) is integrally formed below said outer cover to locate at a lower end of said hollow sleeve (100); said central partition (110) of said hollow sleeve (100) is integrally formed at a central area with a gas mouth (500); and wherein said inflation-valve connecting head (150) is provided on an inner wall surface with a first inner thread section, and at a joint of the inner wall surface and said the central partition (110) with a fourth annular groove (160) for a washer (162) to fit therein and tightly encircle said gas mouth (500).

**12.** The multifunctional two-way fluid check valve as claimed in claim 6, wherein said first valve body (200) is provided below said flange (220) with an axially downward projected ring (230), and an airtight washer (240) being put around a portion of said first valve body (200) immediately above said flange (220).

**13.** The multifunctional two-way fluid check valve as claimed in claim 6, wherein said gas inlet connector (400) is provided around a lower outer wall surface with an externally threaded section (430), against a bottom surface on which an upper end of said second compression spring (132) is pressed; said second chamber (130) also being provided on the inner wall surface with a second inner thread section corresponding to said externally threaded section (430) on said gas inlet connector (400), so that said gas inlet connector (400) may be screwed to an upper part of said second chamber (130).

**14.** The multifunctional two-way fluid check valve as claimed in claim 6, wherein said hollow sleeve (100) has an annular cap screwed to an upper inner end thereof, said annular cap being provided at a top surface with a graduated ring, and graduations indicating pressure settings being provided on a top and a circumferential surface of said graduated ring; said gas inlet connector (400) being provided around a lower outer wall surface with an externally threaded section (430), and said annular cap being provided on an inner wall surface with a third inner thread section for meshing with said externally threaded section (430) on said gas inlet connector (400); said gas inlet connector (400) also being provided around an outer wall surface below said externally threaded section (430) with a radially outward lip portion, against a bottom surface on which an upper end of said second compression spring (132) is pressed; and said gas inlet connector (400) being provided around an outer wall surface above said externally threaded section (430) with a scale pointer corresponding to said graduations on said graduated ring.

**15.** The multifunctional two-way fluid check valve as claimed in claim 6, wherein said hollow sleeve (100) is provided on an outer wall surface below said through hole with a sixth annular groove for receiving a sixth airtight gasket therein.

**16.** The multifunctional two-way fluid check valve as claimed in claim 6, wherein said inflation-valve connecting head (150) below the hollow sleeve (100) is provided on an outer wall surface just below a lower end of said outer cover with a seventh annular groove for receiving a stop ring therein.
